# EUROPEAN PATENT APPLICATION

(11) **EP 2 512 072 A1**
(43) Date of publication of application: **17.10.2012**
(21) Application number: 10791315.4
(22) Date of filing: 13.05.2010
(51) Int. Cl.: H04L 12/56

(54) **MEHOD AND SYSTEM FOR RECOGNIZING RANDOM ACCESS BURST SIGNAL**

(30) Priority: 21.12.2009 CN 200910247057
(71) Applicant: ZTE Corporation, Shenzhen, Guangdong 518057 (CN)
(72) Inventor: SHAN, Shuwei, Shenzhen Guangdong 518057 (CN); WANG, Wei, Shenzhen Guangdong 518057 (CN); HUANG, Lingyun, Shenzhen Guangdong 518057 (CN)
(74) Representative: Jansen, Cornelis Marinus
(86) International application number: PCT/CN2010/072744
(87) International publication number: WO 2010/148809

(57) **Abstract**

The present disclosure discloses a method for identifying an access burst signal, and the method comprises: a receiving terminal performs a Time Advance (TA) estimation to baseband data of two signals respectively to obtain two TA values; and it is determined that the signal received by the receiving terminal is an invalid Access Burst (AB) signal when a difference between the two TA values is greater than a channel dispersion length. The present disclosure also discloses a method for identifying an access burst signal, and the method comprises: the receiving terminal performs demodulation to baseband data of two signals respectively; and it is determined that the signal received by the receiving terminal is a valid Access Burst (AB) signal when two demodulations to baseband data are both successful. The present disclosure also discloses two systems for identifying an access burst signal. The present disclosure can improve the correct recognition probability for the AB signal.

## Description

### TECHNICAL FIELD

The present disclosure relates to the field of mobile communication, in particular to a method and system for identifying an access burst signal.

### BACKGROUND

As the second generation of cellular mobile communication system, Global System for Mobile Communications (GSM) has been applied widely around the world. In order to satisfy the growing demands for high-speed data services and the whole communication market so as to enhance the competitiveness of the current system, Telecommunications Industry Association (TIA) in America and Telecommunications Standards Institute (ETSI) in Europe jointly develop a wireless access technology based on Time Division Multiple Access (TDMA), namely Enhanced Data Rates for GSM Revolution (EDGE) utilizing the current GSM frequency band to provide high-speed data communication services. In order to provide higher data communication rate in the current cellular system, EDGE introduces 8 Phase Shift Keying (8PSK) modulation.

For the GSM/EDGE system, when initiating a call or performing a position updating, a mobile station (transmitting terminal) transmits data on a public wireless channel; as there is no coordination among receiving terminals, the data transmission is completely random; the data that are randomly transmitted to public wireless channels are called as access burst (AB) signals. The AB signals transmitted by the transmitting terminal are not only affected from multi-path channels, but also affected from a co-frequency interference; and the receiving terminal (base station side) usually sets multiple antennas or performs over-sampling to received AB signals to improve balanced demodulation performance. For uplink AB signals, the AB signals are possibly existed on a public channel of each frame, so that the base station side will perform detecting and identifying the AB signals in the public channel of each frame according to certain methods. Thus, when there is no AB signal transmitted by the mobile station on the public channel of one frame, a noise or an interference may be identified as a valid AB signal, thus a failure rate of appointing Stand-along Dedicated Control Channel (SDCCH) is increased; on the contrary, if there are AB signals transmitted by the mobile station, the base station side considers there is no valid AB signal based on the detection principle, thus, the mobile station needs to transmit the AB signal for many times, thereby increasing access time or resulting in access failure. Therefore, a higher demand for a method for identifying a valid AB signal by the base station is raised, not only for guaranteeing correct detection of normal access of the mobile station, but also for preventing wrong detection of an invalid AB signal.

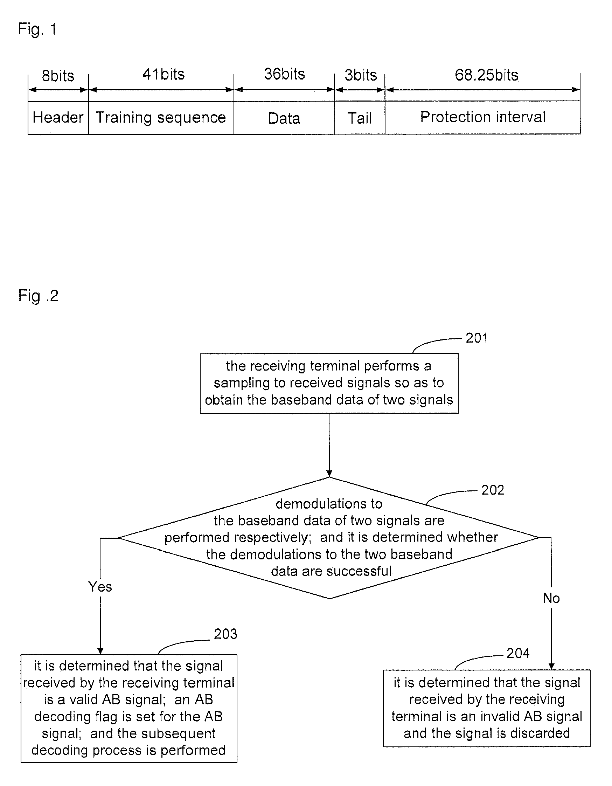

In the data communication field, random access of an AB signal is usually shown as a short burst pulse string. Fig. 1 shows a data format of the access burst AB signal in the EDGE system; the AB signal has 8-bits header, 41-bit training sequence, 36-bit data and 3-bit footer, and 68.25-bit protection interval within which no signal is transmitted. The commonly-used method for identifying the AB signal is to utilize error codes of the training sequence and Cyclical Redundancy Check (CRC) of the data. A threshold of the error codes of the training sequence is the key of identifying an AB signal. An over-low threshold may increase the error decoding probability, while an over-high threshold may prevent the true AB signal from being decoded. Therefore, in order to improve the correct identifying probability of the AB signal, besides the training sequence and the CRC check, other identifying solutions are needed.

A Chinese patent application 991110224.X named as "*Method for Identifying A Random Access in A Public Wireless Channel*" provides a method for identifying an AB signal, it comprises: determining a position section where a burst pulse string is based on a Time Advance (TA), a length of the burst pulse string, and a propagation diffusion width; summing squares of output signals of a quadrature demodulator in calculated position section as Pb, and summing squares of output signals of the quadrature demodulator in a slot bit number M as Pa; and determining whether it is a valid access based on a comparison between Pb/Pa and a threshold value PTh. This identifying method utilizes the characteristic that the access length of the AB signal only takes up partial bits of one slot and protection bits are long. However, the identifying method is effective only if the access level of the AB signal is higher than the system noise beyond a threshold PTh, and a valid AB signal may be discarded when the level of the AB signal closes to that of the noise. In addition, the setting of PTh is also affected by channel deep-fading, which increases wrong identifying probability of the AB signal.

### SUMMARY

Based on the above, the main purpose of the present disclosure is to provide a method and system for identifying an access burst signal, which can identify the Access Burst (AB) signal efficiently.

In order to realize said purpose, the technical solution of the present disclosure is realized in the following:
The present disclosure provides a method for identifying an access burst signal, and the method comprises: the receiving terminal performs a Time Advance (TA) estimation to baseband data of two signals respectively to obtain two TA values; and
when determining that a difference between the two TA values is greater than a channel dispersion length, it is determined that the signal received by the receiving terminal is an invalid access burst (AB) signal.

Here, before the TA estimation, the method may further comprise:
when the receiving terminal receives signals via at least two receiving antennas, a single-sampling to two signals with strongest signal intensity among at least two received signals is performed respectively, to obtain the baseband data of two signals; and
when the receiving terminal receives signals via a receiving antenna, a double-sampling to a received signal is performed, to obtain the baseband data of two signals.

The method may further comprise: the channel dispersion length is determined based on channel physical characteristics, characteristics of a communication system and characteristics of transmission signals.

When the difference between the two TA values is no greater than the channel dispersion length, the method may further comprise: the signal received by the receiving terminal is determined as a valid AB signal.

When the difference of the two TA values is no greater than the channel dispersion length, the method may further comprise: the baseband data for two signals are respectively demodulated; and it is determined whether the two demodulations to the baseband data are successful;
when the two demodulations are successful, it is determined that the signal received by the receiving terminal is a valid AB signal; and
when at least one of the two demodulations is failed, it is determined that the signal received by the receiving terminal is an invalid AB signal.

Furthermore, determining whether the demodulation of the baseband data is successful may specifically include:
determining whether an error rate of a training sequence in the demodulated baseband data is satisfied with a pre-set threshold value; if so, the demodulation is determined to be successful; and if not, the demodulation is determined to be failed.

The method may further comprise:
when the signal received by the receiving terminal is a valid AB signal, an AB decoding flag for the signal is set and the signal is decoded; and
when the signal received by the receiving terminal is an invalid AB signal, the signal is discarded.

The present disclosure also provides a method for identifying an access burst signal, and the method comprises:
a receiving terminal demodulates baseband data to two signals respectively; and
when determining that the two demodulations to the baseband data are successful, it is determined that the signal received by the receiving terminal is a valid AB signal.

Before the baseband data of two signals are demodulated respectively, the method may further comprise:
when the receiving terminal receives signals via at least two receiving antennas, a single-sampling to two signals with strongest signal intensity among at least two received signals is performed respectively, to obtain the baseband data of two signals; and
when the receiving terminal receives signals via a receiving antenna, a double-sampling to a received signal is performed, to obtain the baseband data of two signals.

Furthermore, determining that the demodulation of the baseband data is successful may be specifically as follows:
when an error rate of a training sequence in the demodulated baseband data satisfies a pre-set threshold, the demodulation is determined to be successful.

When at least one of the two demodulations to the baseband data is failed, the method further comprises: it is determined that the signal received by the receiving terminal is an invalid AB signal and the signal is discarded; and
when determining that the signal received by the receiving terminal is a valid AB signal, the method further comprises: an AB decoding flag is set for the signal received by the receiving terminal, and the signal is decoded.

The present disclosure also provides a system for identifying an access burst signal, and the system comprises:
a receiving module configured to receive a signal;
a TA estimation module configured to perform a TA estimation to baseband data of two signals received by the receiving module respectively to obtain two TA values; and
an AB identifying module configured to determine the signal received by the receiving module is an invalid AB signal when a difference between the two TA values is greater than a channel dispersion length.

The system may further comprise:
a sampling module configured to perform a single-sampling to two signals with strongest signal intensity among at least two received signals respectively when the receiving module receives signals via at least two receiving antennas to obtain the baseband data of two signals and provide the baseband data to the TA estimation module; and configured to perform a double-sampling to a received signal when the receiving module receives signals via one receiving antenna to obtain the baseband data of two signals and provide the baseband data to the TA estimation module;
the AB identifying module is further configured to determine that the signal received by the receiving module is a valid AB signal when the difference between the two TA values is no greater than the channel dispersion length.

The system further comprises a demodulation module configured to perform demodulations to the baseband data of two signals respectively when the difference between the two TA values is no greater than the channel dispersion length; and
correspondingly, the AB identifying module is further configured to determine that the signal received by the receiving module is a valid AB signal when the two demodulations of the baseband data are successful, and determine that the signal received by the receiving module is an invalid AB signal when at least one of the two demodulations is failed.

The present disclosure also provides a system for identifying an access burst signal, and the system comprises:
a receiving module configured to receive a signal;
a demodulation module configured to perform demodulations to the baseband data of two signals received by the receiving module respectively; and
an AB identifying module configured to determine that the signal received by the receiving module is a valid AB signal when the two demodulations of the baseband data are successful.

The system may further comprise a sampling module configured to perform a single-sampling to two signals with strongest signal intensity among at least two received signals respectively when the receiving module receives signals via at least two receiving antennas to obtain the baseband data of two signals and provide the baseband data to the demodulation module, and configured to perform a double-sampling to a received signal when the receiving module receives signals via one receiving antenna to obtain the baseband data of two signals and provide the baseband data to the demodulation module.

The AB identifying module is further configured to determine that the signal received by the receiving module is an invalid AB signal when at least one of the two demodulations to the baseband data is failed.

The identifying solutions for the AB signal according to the present disclosure are as follows:
One solution is demodulating the baseband data of two received signals respectively. Here, the signal currently received by the receiving terminal is determined as a valid AB signal as long as the two demodulations are successful. Since the probability of successful demodulating noises simultaneously is far lower than demodulating a valid AB signal when demodulations are performed to two versions of a received signal with two different sampling points or to two received signals from two different receiving antennas, the correct identifying probability for the AB signal identifying may be improved.

The other solution is performing the TA estimation for the baseband data of two received signals respectively. Here, when the difference between the TA estimation values is greater than the channel dispersion length, it is determined that the signal received by the receiving terminal is an invalid AB signal. This solution only needs the TA estimation so that it is relatively easy to be carried out. Since the channel dispersion length is determined based on channel physical characteristics, characteristics of the communication system and characteristics of transmission signals, the channel dispersion length is a relatively fixed value which will not be affected by other factors. Thus, the correct identifying probability for the AB signal may also be improved.

Furthermore, when the above two solutions are combined for the application, complexity of the AB signal identifying can be reduced as much as possible, and correct identifying probability of the AB signal can also be improved.

### BRIEF DESCRIPTION OF THE DRAWINGS

Fig. 1 shows a diagram of the data format of the AB signal;
Fig. 2 shows a flowchart of the first embodiment of identifying method for the AB signal according to the present disclosure;
Fig. 3 shows a flowchart of the second embodiment of identifying method for the AB signal according to the present disclosure;
Fig. 4 shows a flowchart of the third embodiment of identifying method for the AB signal according to the present disclosure;
Fig. 5 shows a structural diagram of the first embodiment of identifying system for the AB signal according to the present disclosure; and
Fig. 6 shows a structural diagram of the second embodiment of identifying system for the AB signal according to the present disclosure.

### DETAILED DESCRIPTION

The technical solution of the present disclosure is described below with reference to the accompanying drawings and embodiments in detail.

Fig. 2 shows the flowchart of the first embodiment of identifying method for the AB signal according to the present disclosure, and the method comprises:
Step 201, the receiving terminal performs a sampling to received signals so as to obtain the baseband data of two signals.

If the receiving terminal receives signals via two or more receiving antennas, the receiving terminal performs a single-sampling to two received signals with strongest signal intensity among at least two received signals respectively so as to obtain the baseband data of two signals. If the receiving terminal receives signals via one receiving antenna, the receiving terminal performs a double-sampling (over-sampling) for the received one signal so as to obtain two sampled signals and thus the baseband data of two signals.

The subsequent processes are performed based on the baseband data of signals.

Step 202, demodulations to the baseband data of two signals are performed respectively; and it is determined whether the demodulations to the two baseband data are successful; if so, performing Step 203; otherwise, performing Step 204.

The essence of determining whether the demodulations to the baseband data are successful is as follows: determining whether an error rate of a training sequence in the demodulated baseband data is satisfied with a pre-set threshold value. The threshold value is the simulation and real measurement result which is generally set as 1 to 3 to indicate that 1 to 3 error code bit(s) in each 41-bit training sequence is acceptable. Providing that the threshold value is 3, and if the error rate of the demodulated baseband data is unsatisfied with the pre-set value, that is to say, each 41-bit training sequence includes more than 3 bits of error codes, it is determined that the demodulation to the baseband data is failed; otherwise, it is determined that the demodulation is successful.

The demodulation to the baseband data of the signals in the above step can adopt demodulations in the prior art according to the requirements. It should be pointed out that, in order to reduce complexity of the process, all of the baseband data in a first signal should be demodulated; and only a portion of the baseband data in a second signal is demodulated. For example, when Multichannel Maximum-Likelihood Sequence Estimation (MLSE) demodulation is adopted, for the second signal, data, from the start position of a single pulse to the position of the channel dispersion length plus 7 to 10 bits behind the training sequence, is demodulated. As the demodulation to the second signal only needs the error code condition of the training sequence, there is no need to demodulate other data.

After two demodulations to the baseband data, that is to say, the demodulation to two signals, are successful in the above step, performing Step 203; and if one demodulation is failed, performing Step 204.

Step 203, it is determined that the signal received by the receiving terminal is a valid AB signal; an AB decoding flag is set for the AB signal; and the subsequent decoding process is performed.

The receiving terminal decodes the baseband data of the received signal based on the AB decoding flag; the decoding process adopts the prior art, which will be omitted here.

Step 204, it is determined that the signal received by the receiving terminal is an invalid AB signal and the signal is discarded.

The invalid AB signal is a noise and the like, which can be discarded directly without the subsequent decoding process.

According to non-relevance of noises, it is known that the probability of successful demodulating noises simultaneously is far lower than demodulating a valid AB signal when demodulations are performed to two versions of a received signal with two different sampling points or to two received signals from two different receiving antennas. Thus, by adopting the identifying process for the AB signal, the correct identifying probability is very high.

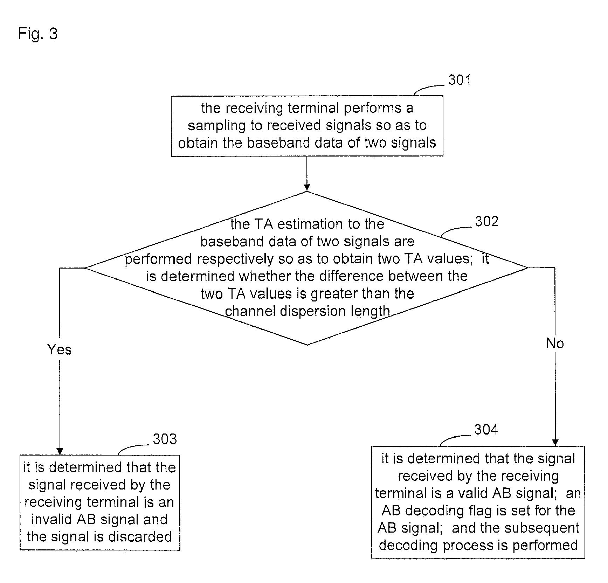

Fig. 3 shows a flowchart of the second embodiment of identifying method for the AB signal according to the present disclosure, and the method comprises:
Step 301, the receiving terminal performs a sampling to received signals so as to obtain the baseband data of two signals.

Step 301 is same as Step 201, which will be omitted here.

Step 302, the Time Advance (TA) estimation to the baseband data of two signals are performed respectively so as to obtain two TA values; it is determined whether the difference between the two TA values is greater than the channel dispersion length; if so, performing Step 303; otherwise, performing Step 304.

The TA estimation adopts the prior art, which will be omitted here. The channel dispersion length is determined based on channel physical characteristics, characteristics of a communication system and characteristics of transmission signals. For example, for GMSK signals in the GSM system, the channel dispersion length may be 4 to 6 symbols.

Providing that the channel dispersion length is 4 to 6 symbols, and when the difference between two TA values of the baseband data is greater than the channel dispersion length (for example, 6), performing Step 303; if the difference is no greater than 6, performing Step 304.

Step 303, it is determined that the signal received by the receiving terminal is an invalid AB signal and the signal is discarded.

Step 303 is same as Step 204, which will be omitted here.

Step 304, it is determined that the signal received by the receiving terminal is a valid AB signal; an AB decoding flag is set for the AB signal; and the subsequent decoding process is performed. The receiving terminal decodes the baseband data of the received signal based on the AB decoding flag; the decoding process adopts the prior art, which will be omitted here.

As far as the prior AB identifying solution is considered, the channel dispersion length of the above process is determined based on channel physical characteristics, characteristics of a communication system and characteristics of transmission signals, so the channel dispersion length is a relatively fixed value that will not be affected by other factors, and thus the correct probability for the AB identifying is high.

In the process, however, for one of the baseband data with the difference between two TA values less than the channel dispersion length, it may also be an invalid AB signal, such as a noise. Although the process is very simple to realize with respect to the process in Fig. 2, the correct identifying probability for the AB signal is relatively low. Thus, the process is suitable for the use with limited complexity.

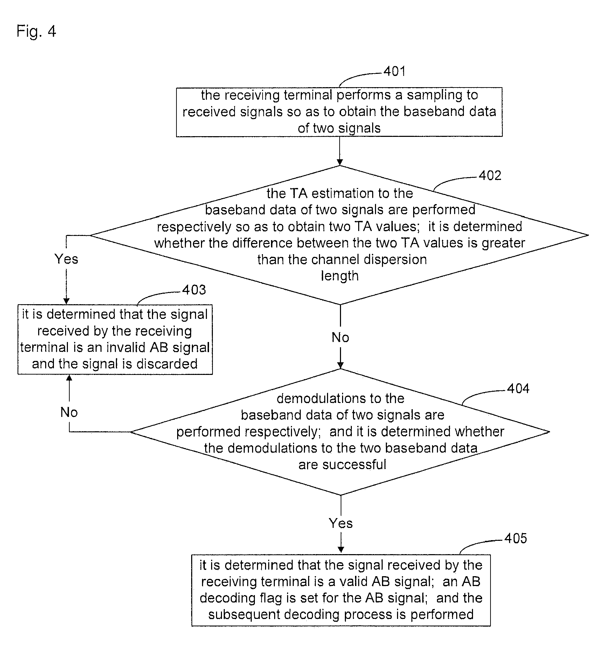

Since the process of Fig. 3 may fail to identify a noise with the difference between the TA values less than the channel dispersion length, the processes of Fig. 2 and Fig. 3 may be combined according to the requirements in the practical application. The combined process shown in Fig. 4 comprises:
Step 401, the receiving terminal performs a sampling to received signals so as to obtain the baseband data of two signals.
Step 402, the TA estimation to the baseband data of two signals are performed respectively so as to obtain two TA values; it is determined whether the difference between the two TA values is greater than the channel dispersion length; if so, performing Step 403; and if not, performing Step 404.
Step 403, it is determined that the signal received by the receiving terminal is an invalid AB signal and the signal is discarded.
Step 404, demodulations to the baseband data of two signals are performed respectively; and it is determined whether the demodulations to the two baseband data are successful; if so, performing Step 405; and if not, performing the Step 403.

When the difference between the TA values is less than the channel dispersion length, the signal received by the receiving terminal may be an invalid AB signal, so the demodulations can be carried out for the baseband data of two signals to determine whether the signal received by the receiving terminal is an invalid AB signal. Step 404 is same as Step 202, which will be omitted here.

Step 405, it is determined that the signal received by the receiving terminal is a valid AB signal; an AB decoding flag is set for the AB signal; and the subsequent decoding process is performed.

The process can reduce the complexity for the AB signal identifying as much as possible and improve the correct identifying probability for the AB signal.

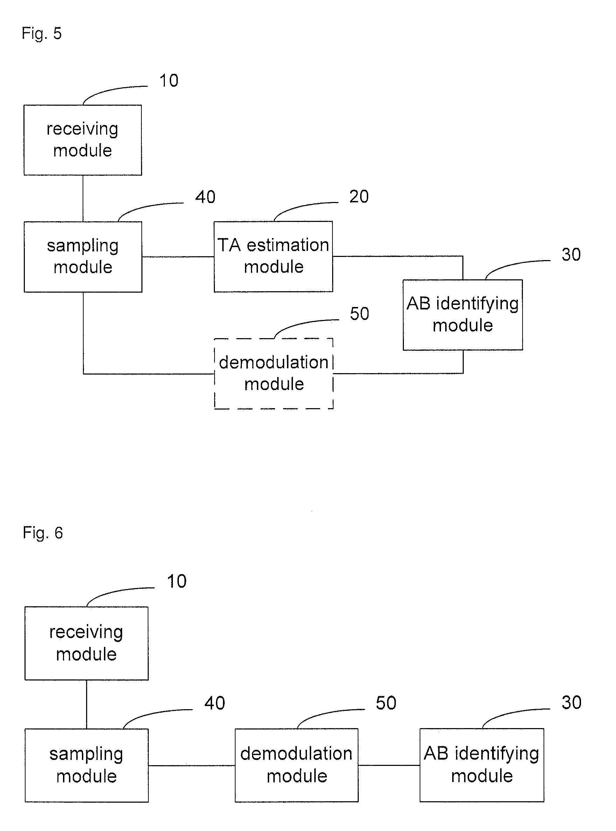

In order to carry out said identifying methods, the present disclosure provides two identifying systems shown in Fig. 5 and Fig. 6. The processes shown in Fig. 3 and Fig. 4 according to the present disclosure can be carried out based on the system shown in Fig. 5, and the system comprises:
a receiving module 10 for receiving a signal;
a TA estimation module 20 for performing a TA estimation for the baseband data of two signals received by the receiving module 10 respectively so as to obtain two TA values; and
an AB identifying module 30 for determining the signal received by the receiving module 10 is an invalid AB signal when the difference between two TA values is greater than the channel dispersion length.

The AB identifying module 30 is further for determining the signal received by the receiving module 10 is a valid AB signal when the difference between two TA values is no greater than the channel dispersion length.

The system further comprises: a sampling module 40 for performing the single-sampling to two signals with strongest signal intensity among at least two received signals respectively when the receiving module 10 receives signals via at least two receiving antennas so as to obtain the baseband data of two signals and providing the baseband data to the TA estimation module 20, and for performing the double-sampling to the received signal when the receiving module 10 receives the signal via one receiving antenna so as to obtain the baseband data of two signals and providing the baseband data to the TA estimation module 20.

The system further comprises: a demodulation module 50 for performing demodulation to the baseband data of two signals respectively when the difference between two TA values is no greater than the channel dispersion length.

Correspondingly, the AB identifying module 30 is further for determining that the signal received by the receiving module 10 is a valid AB signal when two demodulations of the baseband data are successful, and determining that the signals received by the receiving module 10 is an invalid AB signal when at least one of two demodulations is failed.

The demodulation module 50 in Fig. 5 is optional.

The process shown in Fig. 2 of the present disclosure can be carried out based on the system shown in Fig. 6, and the system comprises:
a receiving module 10 for receiving signals;
a demodulation module 50 for performing demodulations to the baseband data of two signals received by the receiving module 10 respectively; and
an AB identifying module 30 for determining that the signal received by the receiving module 10 is a valid AB signal when two demodulations to the baseband data are successful.

The system further comprises: a sampling module 40 for performing the single-sampling to two signals with strongest signal intensity among at least two received signals respectively when the receiving module 10 receives signals via at least two receiving antennas so as to obtain the baseband data of two signals and providing the baseband data to the demodulation module 50, and for performing the double-sampling to the received signal when the receiving module 10 receives the signal via one receiving antenna so as to obtain the baseband data of two signals and providing the baseband data to the demodulation module 50.

The AB identifying module 30 is further for determining the signal received by the receiving module 10 as an invalid AB signal when at least one of two demodulations to the baseband data is failed.

The above is only the preferred embodiment of the present disclosure and not intended to limit the protection scope of the present disclosure.

## Claims

1. A method for identifying an Access Burst (AB) signal, comprising:
performing, by a receiving terminal, a Time Advance (TA) estimation to baseband data of two signals respectively to obtain two TA values; and
determining a signal received by the receiving terminal is an invalid AB signal when a difference between the two TA values is greater than a channel dispersion length.

2. The method for identifying the access burst signal according to claim 1, further comprising: before the TA estimation,
performing a single-sampling to two signals with strongest signal intensity among at least two received signals respectively, when the receiving terminal receives signals via at least two receiving antennas, to obtain the baseband data of two signals; and
performing a double-sampling to a received signal, when the receiving terminal receives signals via one receiving antenna, to obtain the baseband data of two signals.

3. The method for identifying the access burst signal according to claim 1, further comprising: determining the channel dispersion length based on channel physical characteristics, characteristics of a communication system and characteristics of transmission signals.

4. The method for identifying the access burst signal according to claim 1, further comprising: determining the signal received by the receiving terminal is a valid AB signal when the difference between the two TA values is no greater than the channel dispersion length.

5. The method for identifying the access burst signal according to claim 1, further comprising: performing demodulations to the baseband data of two signals respectively and determining whether the two demodulations to the baseband data are successful, when the difference between the two TA values is no greater than the channel dispersion length;
determining the signal received by the receiving terminal is a valid AB signal when the two demodulations are successful; and
determining the signal received by the receiving terminal is an invalid AB signal when at least one of the two demodulations is failed.

6. The method for identifying the access burst signal according to claim 5, wherein the determining whether the demodulation to the baseband data is successful comprises:
determining whether an error rate of a training sequence in the demodulated baseband data satisfies a pre-set threshold value; if so, determining that the demodulation is successful; and if not, determining that the demodulation is failed.

7. The method for identifying the access burst signal according to any of claims 1 to 6, further comprising:
setting an AB decoding flag for the signal received by the receiving terminal and decoding the signal when the signal is a valid AB signal; and
discarding the signal received by the receiving terminal when the signal is an invalid AB signal.

8. A method for identifying an Access Burst (AB) signal, comprising:
performing, by a receiving terminal, demodulations to baseband data of two signals respectively; and
determining a signal received by the receiving terminal is a valid AB signals when determining two demodulations to the baseband data are successful.

9. The method for identifying the access burst signal according to claim 8, further comprising the step, performed before performing the demodulations to the baseband data for two signals respectively, of:
performing a single-sampling to two signals with strongest signal intensity among at least two received signals respectively, when the receiving terminal receives signals via at least two receiving antennas, to obtain the baseband data of two signals; and
performing a double-sampling to a received signal, when the receiving terminal receives signals via one receiving antenna, to obtain the baseband data of two signals.

10. The method for identifying the access burst signal according to claim 8, wherein the determining the demodulations to the baseband data are successful comprises:
determining the demodulations to the baseband data are successful when an error rate of a training sequence in the demodulated baseband data satisfies a pre-set threshold value.

11. The method for identifying the access burst signal according to claim 10, further comprising: determining the signal received by the receiving terminal is an invalid AB signal and discarding the signal, when at least one of the two demodulations to the baseband data is failed; and
setting an AB decoding flag for the signal received by the receiving terminal and decoding the signal when determining the signal received by the receiving terminal is a valid AB signal.

12. A system for identifying an Access Burst (AB) signal, comprising:
a receiving module configured to receive a signal;
a Time Advance (TA) estimation module configured to perform a TA estimation to baseband data of two signals received by the receiving module respectively to obtain two TA values; and
an AB identifying module configured to determine the signal received by the receiving module is an invalid AB signal when determining a difference between the two TA values is greater than a channel dispersion length.

13. The system for identifying the access burst signal according to claim 12, further comprising:
a sampling module configured to:
perform a single-sampling to two signals with strongest signal intensity among at least two received signals respectively, when the receiving module receives signals via at least two receiving antennas, to obtain the baseband data of two signals, and provide the baseband data to the TA estimation module; and
perform a double-sampling to a received signal, when the receiving module receives signals via one receiving antenna, to obtain the baseband data of two signals, and provide the baseband data to the TA estimation module;
wherein, the AB identifying module is further configured to determine that the signal received by the receiving module is a valid AB signal when determining the difference between the two TA values is no greater than the channel dispersion length.

14. The system for identifying the access burst signal according to claim 13, further comprising a demodulation module configured to perform demodulations to the baseband data of two signals respectively when the difference between the two TA values is no greater than the channel dispersion length;
wherein, the AB identifying module is further configured to determine that the signal received by the receiving module is a valid AB signal when the two demodulations of the baseband data are determined to be successful, and determine that the signal received by the receiving module is an invalid AB signal when at least one of the two demodulations is determined to be failed.

15. A system for identifying an Access Burst (AB) signal, comprising:
a receiving module configured to receive a signal;
a demodulation module configured to perform demodulations to baseband data of two signals received by the receiving module respectively; and
an AB identifying module configured to determine the signal received by the receiving module is a valid AB signal when the two demodulations to the baseband data are determined to be successful.

16. The system for identifying the access burst signal according to claim 15, further comprising:
a sampling module configured to:
perform a single-sampling to two signals with strongest signal intensity among at least two received signals respectively, when the receiving module receives signals via at least two receiving antennas, to obtain the baseband data of the two signals, and provide the baseband data to the demodulation module; and
perform a double-sampling to a received signal, when the receiving module receives signals via one receiving antenna, to obtain the baseband data of two signals, and provide the baseband data to the demodulation module.

17. The system for identifying the access burst signal according to claim 15, wherein the AB identifying module is further configured to determine the signal received by the receiving module is an invalid AB signal when at least one of the two demodulations to the baseband data is determined to be failed.
